# EUROPEAN PATENT SPECIFICATION

(11) **EP 3 460 225 B1**
(45) Date of publication and mention of the grant of the patent: **16.03.2022**
(21) Application number: 18193526.3
(22) Date of filing: 10.09.2018
(51) Int. Cl.: F02G 5/02, F01N 3/20, F02M 35/10, F01N 5/02, F01P 11/02, F01K 23/06

(54) **INTERNAL COMBUSTION ENGINE PROVIDED WITH A WASTE HEAT RECOVERY SYSTEM**
VERBRENNUNGSMOTOR MIT ABWÄRMERÜCKGEWINNUNGSSYSTEM
MOTEUR À COMBUSTION INTERNE POURVU D'UN SYSTÈME DE RÉCUPÉRATION DE CHALEUR PERDUE

(30) Priority: 20.09.2017 IT 201700105386
(43) Date of publication of application: 27.03.2019
(73) Proprietor: FPT Industrial S.p.A., 10156 Torino (IT); AVL List GmbH, 8020 Graz (AT); Iveco S.p.A., 10156 Torino (IT)
(72) Inventor: FESSLER, Harald, 9320 Arbon (CH); COCOCCETTA, Fabio, 8006 Zurigo (CH)
(74) Representative: Studio Torta S.p.A.

(56) References cited:
- EP-A1- 2 789 818
- EP-A1- 3 059 430
- WO-A1-2015/197086
- DE-A1-102009 039 551
- DE-A1-102012 006 141
- US-A1- 2005 072 155
- US-A1- 2011 167 818

## Description

### CROSS-REFERENCE TO RELATED APPLICATIONS

This application claims priority from Italian Patent Application No. 102017000105386 filed on September 20, 2017.

### Field of the invention

The present invention relates to the field of the combustion engines provided with system capable to recover energy through a thermodynamic cycle from the exhaust gases in order to produce electrical and/or mechanical energy to supplement the combustion engine.

### Description of the prior art

The Waste heat recovery systems are well known since a long time in the combustion engine field in order to increase the overall efficiency of the combustion engine.

One of the most valid cycles implemented to recovery energy is the Rankine cycle, usually adopting ethanol, water and refrigerants as working medium.

Several works have been published discussing on the ideal working medium.

Ethanol represents a good compromise between the use of water and refrigerants, the first being more economic and safe, the second being more efficient but less ecologic.

The heat production by the internal combustion engine and its aftertreatment system should not be influenced by the WHR system. In addition an unexpected WHR system behavior, malfunction or controlling error could lead to excessive pressure in the WHR system leading to explosion thereof.

The pressure has to be released to prevent any explosion risk of the WHR system, however, the hot Ethanol or generically the organic Rankine Cycle working fluid cannot be released in the ambient air, because of flammability risk and/or legislation requirements. Examples of documents pertaining to the field of the invention are US2011167818A1, WO2015197086A1, DE10200903551A1, and DE102012006141A1.

### Summary of the invention

The main object of the present invention is to face the problems connected with an excessive pressure in the WHR system.

The basic idea is to leak the WHR ethanol into a liquid tank.

The liquid tank can contain a urea-based agent and/or combustion engine fuel, such as diesel, and/or water and/or can coincide with the engine coolant circuit.

In addition, according to a preferred release strategy, based on the pressure and/or temperature of the WHR medium the WHR medium first is vented into the ATS (After-treatment-system) system by means of a relief valve and at the same time or in succession in at least one of said liquid tanks.

Preferably, the internal combustion engine to which the WHR is paired is a Diesel engine, and the WHR ethanol is released (immediately) upstream of the DOC (Diesel Oxidation catalyst) to oxidize it.

According to a preferred embodiment of the invention, two or three liquid tanks are installed in the vehicle and the release strategy and the release strategy and the succession of the liquid tanks selected for the venting is according to the severity of the overpressure/overtemperature of the WHR medium. Advantageously, the products which will be released into the ambient will be CO2 and water, being the ethanol released in the ATS burnt with the residual oxygen contained in the exhaust gasses produced by the internal combustion engine.

According to a preferred implementation of the present invention, it is possible to vent the ethanol in the ATS through a suitable, intermediate tank arranged between the WHR and the ATS. This solution permits to face those situations where high quantity of ethanol is vented suddenly which could exhaust the complete residual oxygen contained in the exhaust gasses.

Therefore, this tank permits to distribute the ethanol dosing in the ATS over a larger time, such that all the ethanol is oxidized without leakage to the environment without its burning and when the ATS is not capable to oxidize all the WHR medium release, then it is released also in one or more of the above liquid tanks

As disclosed below, several devices can be selected to vent excesses of organic fluid.

Preferably, the first devices to vent the excesses of WHR ethanol are selected not to stop the vehicle and only as "fall back" remedy are selected those devices stopping the vehicle, such as the engine coolant circuit.

For example, if a water tank is present, the first (dedicated) liquid tank used to vent the WHR medium would be the water tank, then the urea-based agent tank, then the engine fuel and so on.

The urea based agent is dosed in the ATS just upstream of the SCR catalyst for the abatement of NOx contained in the exhaust gasses produced by the internal combustion engine. Preferably, the urea based agent is a different compound with respect to the organic fluid implemented in the WHR. Preferably, the urea based agent is a different compound with respect to the fuel implemented to supply the internal combustion engine, such as gasoline and more preferably diesel.

Preferably, the organic fluid implemented in the WHR is a different compound with respect to the fuel implemented to supply the internal combustion engine, such as gasoline and more preferably diesel.

In case the internal combustion engine is a gasoline one, it can be operated in lean burn in order to introduce into the ATS useful oxygen needed to convert the vented ethanol. Preferably, a pressure sensor monitors the pressure trend into the WHR in order to manage such lean burn operation.

Alternatively or in combination, also a temperature sensor can be implemented to monitor a temperature trend into the WHR.

According to a preferred WHR managing strategy, the first venting step is directed to vent WHR medium within the ATS as disclosed above.

However, the severity and the persistence of the overpressure in the WHR system could such that the venting in the ATS even through an intermediate tank is not sufficient or not feasible due to the lacking of the intermediate tank, thus the WHR medium is vented also in the liquid tank when the ATS is judged as insufficient to face the amount of WHR medium to be released.

According to a preferred embodiment of the invention two or more subsequent or contemporary venting procedures steps are carried out to face a sudden ethanol overpressure. The venting procedures are listed according to a predetermined priority, so that the first vehicle component is the ATS, then, for example, the water tank, then the urea based liquid agent, then the engine fuel tank, then the engine coolant circuit.

Of course one or more of the listed tank can be absent, however, the concept of ordering a list of "reaction step" is part of the invention. Therefore, according to a preferred embodiment of the invention, a **second** reaction step is directed to vent an excessive portion of the WHR medium, beyond the one vented within the ATS, within the internal combustion engine intake, in order to burn it within the engine cylinders. Preferably, the engine control unit controlling the fuel injection within the internal combustion engine cylinder accounts for the venting of WHR medium within the engine intake, by reducing or stopping the amount of fuel injected in the combustion engine such that to release oxygen in the exhaust gasses.

According to a preferred embodiment of the invention, a **third** reaction step is directed to vent a portion of the WHR medium, beyond the one vented within the ATS, within said tank containing a liquid, preferably a urea based (liquid) agent. The urea based agent is withdrawn from said urea agent tank to be dosed in the aftertreatment system, in particular immediately upstream of the SCR or SCRoF (Selective Catalytic Reduction on Filter). Preferably, according to this third reaction step, the engine control unit is programmed to monitor the venting operations and to decide if the urea based agent mixed with the WHR medium can be or not tolerated by the SCR/SCRoF operation. In case the ATS cannot tolerate such dilution, a message is displayed to the driver informing him of the need to replace the urea based reducing agent due to a failure of the WHR system.

The amount of WHR medium dispersed in the urea agent (AdBlue) tank can be calculated and dosed on the basis of the amount and temperature of the urea agent stored in its tank, in order to avoid its evaporation.

According to a preferred embodiment of the invention, a **fourth** reaction step is directed to vent a portion of the WHR medium, beyond the one vented within the ATS, within the engine fuel tank. Preferably, according to this fourth reaction step, the engine control unit is programmed to monitor the dilution of the fuel contained in the fuel tank, and in case the engine cannot tolerate such dilution, the control unit is programmed to display to the driver a message informing him of the need of replacing the engine fuel due to a failure of the WHR system. The engine control unit can be programmed to operate a derating of or to stop the internal combustion engine according to the amount of WHR medium vented in the fuel tank.

According to a preferred embodiment of the invention, a **fifth** reaction step is directed to vent a portion of the WHR medium, beyond the one vented within the ATS, within the engine coolant circuit. Preferably, according to this **fifth** reaction step, the engine control unit is programmed to display to the driver a message informing him of the need of replacing the engine coolant circuit due to a failure of the WHR system. The engine control unit can be programmed to operate a derating of or to stop the internal combustion engine according to the amount of WHR medium vented in the engine coolant circuit.

According to another preferred embodiment of the invention, a **sixth** reaction step that can occur contemporary or after any of the previous reaction steps and consists of the venting of ethanol in a dedicated water tank.

According to a further preferred embodiment of the invention, a **seventh** reaction step that can occur contemporary or after any of the previous reaction steps and consists of the venting of ethanol in a windscreen washing liquid tank.

According to another preferred embodiment of the invention, a **eighth** reaction step that can occur contemporary or after any of the previous steps. Such seventh reaction step includes the stop of the WHR pump implemented to force the circulation of the WHR medium within the WHR circuit.

Advantageously, all the above steps are direct to avoid a free delivery of hot and dangerous WHR medium in the ambient air directly. For this reason they can be named "reaction steps".

Some of the reaction steps can be invasive for the functionality of the vehicle, because they can stop it, thus they can be executed when the severity of the overpressure exceeds a predetermined threshold. However, any damaging risk of the WHR and engine or related vehicle subsystems is minimized without prejudice for the health of human being.

According to a preferred embodiment of the invention, when three or more reaction steps are foreseen a state diagram can be arranged for managing the triggering of the reaction steps on the basis of a one or more state variables such as the ethanol pressure and/or temperature.

The object of the present invention is a combustion engine provided with an ethanol Waste Heat Recovery System according to claim 1.

Another object of the invention is a method to manage overpressure and/or over temperature in a WHR system associated with a combustion engine, preferably a diesel engine.

These and further objects are achieved by means of the attached dependent claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a sketch of a preferred embodiment of the present invention,
- Fig. 2 shows a sketch of another preferred embodiment of the present invention.

The same reference numerals and letters in the figures designate the same or functionally equivalent parts. According to the present invention, the term "second element" does not imply the presence of a "first element", first, second, etc... are used only for improving the clarity of the description and they should not be interpreted in a limiting way.

### Detailed description of the preferred embodiments

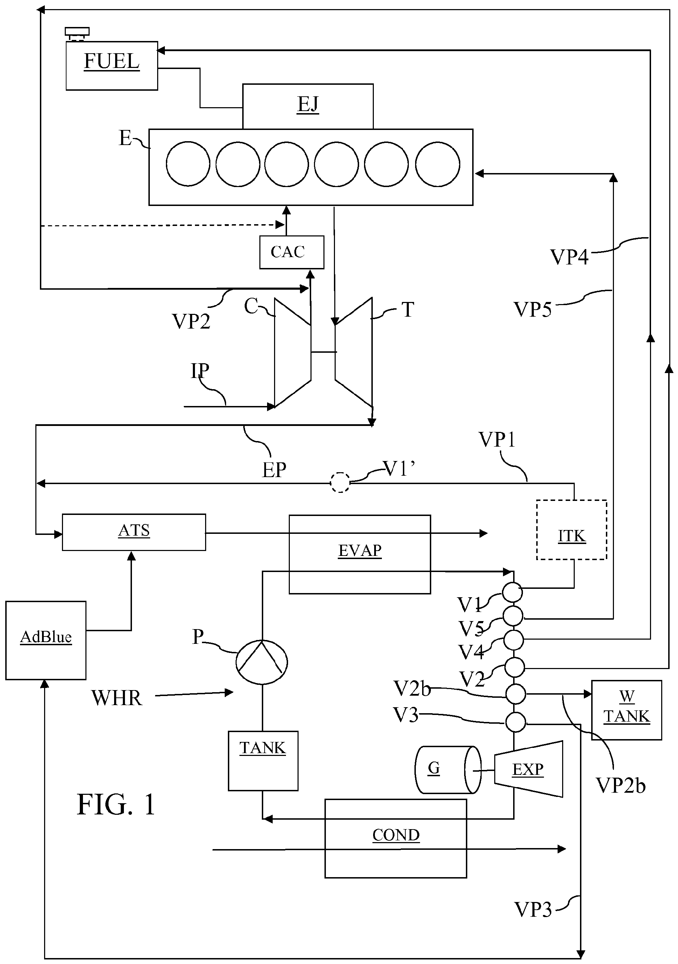

Figure 1 shows a schematic scheme reproducing the basic concept of the present invention.

A combustion engine E, for example a six cylinder combustion engine, is preferably provided with a turbocharger TC, with the turbine T, connected to the exhaust manifold of the combustion engine, and a compressor C, connected to the intake manifold of the combustion engine to compress fresh air sucked from the outside, whereby the turbine drives the compressor.

The combustion engine comprises injection means EJ, adapted to supply fuel into the combustion engine cylinders and an exhaust line EP on which an aftertreatment system ATS is arranged to eliminate or reduce the pollutants contained in the exhaust gasses produced by the internal combustion engine, before their delivery to the environment.

A tank FUEL contains the fuel to be burnt by the internal combustion engine and injected therein by means of the injection means EJ. The fuel can be Diesel or gasoline or natural gas or LPG.

On the exhaust line, preferably downstream of the entire ATS or between its devices DOC, SCR, DPF, three-way catalyst, etc.. of the ATS, whose acronyms are well known to the skilled person in the art, a main heat exchanger EVAP is arranged, capable to extract heat from the exhaust gas in order to heat the ethanol used as working medium of a waste heat recovery system WHR and thus mechanical energy through an expander EXP, per se known. The expander, in turn can be operatively connected or connectable with an electric generator G or with the combustion engine crankshaft in a per se known turbo-compound configuration. The WHR circuit as usual has an evaporator EVAP as hot source and a condenser COND as cold source. Between the evaporator and the condenser, according to the circulation orientation of the WHR medium in the WHR circuit, an expander is arranged, suitable to extract said energy.

On the opposite side with respect to the expander, namely between the condenser and the evaporator according to the ethanol circulation orientation in the WHR circuit, a pump P is arranged, suitable to supply the ethanol to the evaporator.

Preferably, immediately upstream of the pump P a tank of liquid WHR medium, indicated as TANK, is arranged.

According to the invention, a relief valve V1 is arranged in the WHR circuit to vent ethanol upstream or within the ATS components according to the ATS components disposition. For example, the ATS could comprise a DOC (Diesel oxidation catalyst) and/or an SCR (selective catalytic reduction) and/or a three-way catalyst. The ethanol is vented immediately upstream of the DOC or SCR or three-way catalyst.

This arrangement comprising the first venting pipe with its venting valve permits the execution of a so called "first reaction step" to an ethanol overpressure/overtemperature event.

Figure 1 discloses the relief valve V1 arranged between the evaporator EVAP and the expander EXP, according to the ethanol circulation.

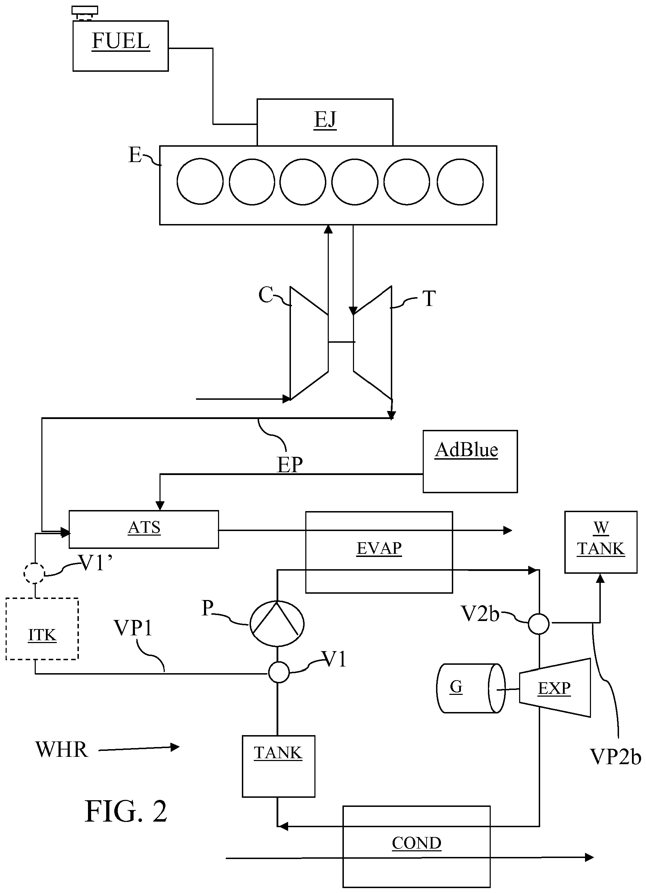

Figure 2 discloses the relief valve V1 arranged between the ethanol tank TANK and the pump P, according to the ethanol circulation.

For both the examples a venting pipe VP1 connects the outlet of the relief valve V1 with the exhaust line EP. According to another preferred embodiment of the invention, that can be combined with any one of the examples of figure 1 or 2, the vented ethanol is stored in an optional intermediate tank ITK arranged on the pipe VP1 which connects the relief valve V1 and the exhaust line EP of the combustion engine.

The storage of the ethanol is only temporary, because the scope of such intermediate tank is to distribute the ethanol in the exhaust line in a larger time interval than the time interval of the overpressure event.

Anyway, the venting of the WHR into the exhaust line could be controlled to avoid any risk of overheating of the ATS and/or exceeding the limited available oxygen in the exhaust line.

According to a preferred embodiment of the invention, said relief valve or an optional metering valve V1' arranged at the outlet of the intermediate tank ITK is controlled by a control unit, suitably programmed.

Such control unit, preferably, the one implemented to control the internal combustion engine ECU, controls the relief valve(s) to minimize the malfunction risk of the WHR system versus the ATS overheating and/or the releasing of ethanol in the ambient air due to the complete consumption of residual oxygen contained in the exhaust gas.

While the risk overheating and/or lack of oxygen on the ATS side can be calculated from exothermic reactions the failure risk of the WHR has to be simulated or tested for various operating conditions.

When an intermediate tank ITK is implemented, it can be cooled and/or the portion of venting pipe VP between the WHR circuit and the intermediate tank ITK can be cooled, for example by means of a cooler.

According to a preferred embodiment of the invention, the WHR circuit is also operatively connected with the combustion engine intake, so that, when the venting of the Ethanol into the ATS is at its limit due to ATS overheating and/or lack of available oxygen in the exhaust gas, a portion of the excessive ethanol is conveyed at the combustion engine intake IP, if the engine is in fired mode.

According to this embodiment a second venting pipe VP2 with its relief valve V2 are arranged to connect the WHR with the engine intake immediately before or after the cooler arranged downstream the supercharger C.

The second venting valve V2 can be arranged as disclosed in figure 1 or between TANK and P as disclosed in figure 2. This arrangement of the second venting pipe and relative valve permits the execution of a so called "**second** reaction step".

It should be consider that the thermal processes have a considerable inertia, therefore, the WHR overpressure could happen immediately after engine stop, thus the engine operation condition must be considered to operate the second reaction step.

Preferably, the engine control unit, controlling the combustion engine operation, including the fuel injection within the internal combustion engine cylinder(s), manages and accounts for the venting of ethanol within the engine intake, by reducing/stopping consequently, the amount of fuel injected in the engine cylinders by means of the injection means EJ.

According to another preferred embodiment of the invention that can be combined with the above described, the WHR medium is vented in the tank storing AdBlue, namely a liquid urea based reducing agent usually dosed in the ATS immediately upstream of the SCR or SCRof.

A valve V3 is arranged on the WHR circuit controlling the venting of the ethanol in the AdBlue tank through the pipe VP3.

The amount of the working fluid that can be released into the urea agent tank depends on the AdBlue level in the tank and/or on the temperature/pressure of the AdBlue into the tank. The thermal inertia of the AdBlue can be used to cool down the exceeding ethanol with respect to that vented in the ATS and optionally in the engine intake, avoiding to release it into ambient, directly.

Being the ethanol a different compound with respect to the urea based reducing agent, clearly the effects of a subsequent injection of urea based reducing agent would be altered. Below certain threshold the control unit can adjust the injection, by considering the mixing of the two different compounds.

Preferably, above a certain threshold of ethanol in AdBlue, a lamp on the dashboard could be switched on, indicating that a replacement of the AdBlue into the tank is needed and a fault on WHR has been detected. The temperature of the AdBlue has to be measured or calculated to limit the vented WHR media quantity and prevent any AdBlue evaporation or overheating.

According to this embodiment, the venting of excessive ethanol in the AdBlue tank is named "**third** reaction step".

According to another embodiment of the invention that can be combined with the above ones, an excess of WHR medium beyond that vented in the ATS, is vented in the fuel tank FUEL, by exploiting the thermal capacity of the fuel to cool down the WHR medium. This represent a "**fourth** reaction step".

According to this embodiment, a venting pipe VP4 with its relief valve V4 connects the WHR and the fuel tank FUEL. Also in this case, the control unit can adjust the metering of fuel into the cylinder engines by considering the presence of released ethanol. Andalso in this case, if necessary, above a certain threshold of ethanol in the fuel a lamp on the dashboard could be switched on, indicating that a replacement of the fuel into the tank is needed and a fault on WHR has been detected. Obviously, this embodiment can be implemented when the fuel is liquid, for example gasoline or diesel. Preferably, the amount of WHR medium dispersed in the fuel tank is calculated on the basis of the amount of fuel actually contained in such a tank and its temperature in order to prevent fuel evaporation or overheating.

According to a further embodiment of the invention, an excessive of WHR medium, beyond the one already vented within the ATS, is vented in the coolant circuit, through the venting pipe VP5 and its relief valve V5, of the internal combustion engine. Also in this case a dedicated venting pipe (not disclosed) with its relief valve can be arranged to connect the WHR with the coolant circuit. This represents a "**fifth reaction step**".

According to a further embodiment of the invention, see figure 2, a dedicated water tank W is arranged to cool down the vented WHR medium. Such a tank can have a capacity of example of 5 - 200 liters and can be used when the ATS and/or intake venting are judged as not sufficient to face the WHR overpressure. For this reason, the relating venting pipe is named VP2b and its relief valve V2b due to the preferred sequence of activation. In case also the following venting pipe are present VP3, VP4 they are activated after VP2b activation. The venting of ethanol in the dedicated water tank can be named as "**sixth reaction step**".

Also the windscreen washing liquid tank can be a suitable liquid tank to vent an excess of said WHR organic fluid.

Therefore, a suitable venting pipe with its corresponding relief valve arranged thereon can be suitably arranged and controlled as one of the devices available to manage an excess of WHR organic fluid.

The venting of ethanol in the dedicated water tank can be named as "**seventh reaction step**".

According to another preferred embodiment of the invention, an "**eighth reaction step**" can occur contemporary or after any of the previous steps. Such seventh step includes the stop of the WHR pump implemented to force the circulation of the WHR medium within the WHR circuit. This reaction step can be implemented also alone according to the circumstances.

Preferably, the Engine control unit (ECU) implements a sort of "risk function" essentially monitoring the ethanol pressure and/or temperature to manage the venting of excessive WHR medium.

It should be clear that the ethanol venting in the ATS represents the first reaction step. However, the release of ethanol in the engine intake or in any of the other systems here described, can be concomitant or not with the venting of ethanol in the ATS.

For example, if in a first phase the ethanol is released in the ATS and optionally also in another system such as the engine intake or the urea agent tank, in a second phase, the ATS overheating could lead the ECU to close the first valve V1 by opening other (still closed) valves V3/V4 and/or by stopping the pump P.

Therefore, if the reaction steps are listed from the less invasive to the more invasive for the internal combustion engine, two or more reaction steps can be activated contemporary even when a preceding reaction step, in the list, is triggered off after "completion" of such preceding reaction step.

Another example is the urea agent tank. When the ethanol released therein is so much that there is a concrete evaporation risk of the urea agent with a consequent direct delivery of the ethanol in the ambient air, the corresponding valve (V3) is closed even if the more invasive reaction step (fourth) is still in operation.

The management of each venting valve can be carried out through independent control processes where the opening command is based on gradually increasing threshold on the pressure and/or temperature of the WHR medium. Such thresholds are managed in order to define the above listing of intervention between the reaction steps (systems). Nevertheless, according to the severity of the ethanol overpressure and/or overtemperature, such openings can be commanded at the same time.

The regulation/closing command of each venting valve depends on the specific system to which the valve refers, for example the ATS temperature and oxygen content in the exhaust gas in case of V1, the temperature of the urea agent in case of V3, and so on, therefore, the closing/regulating commands are managed through independent ECU processes.

Therefore, preferably the ECU monitors the residual oxygen in the exhaust gas produced by the internal combustion engine, and evaluates the maximum dispersion of WHR medium within the ATS and limit such dispersion both on the basis of the available oxygen and on basis of the ATS temperature.

The ECU preferably monitors, also, the amount and preferably the temperature of Adblue stored in its tank, and decides if and the amount of WHR medium to be dispersed in the AdBlue tank.

The ECU is also programmed to manage the WHR medium injection into the intake manifold to replace some fuel (Diesel or Petrol).

The ECU is programmed to face the excessive pressure within the WHR circuit first dispersing an amount of WHR medium in the ATS, then also in the engine intake, in the AdBlue tank, in the fuel tank, then also in the coolant circuit till stopping the WHR pump.

It should be clear that the WHR pump stop can be commanded even before some of the above reaction steps, when the ECU estimates the WHR overpressure event as particularly critical to stop the thermodynamic circle. Preferably, an exhaust gas bypass is foreseen to control engine heat rejection in order to bypass the WHR evaporator EVAP. Preferably, the exhaust gas will anyway bypass the heat exchanger under these critical conditions.

Thus the control unit can be provided of a so called "risk evaluation function", which defines how much WHR media must be withdrawn from the WHR circuit and distributed in the available devices/positions of the "traction system", wherein the "traction system" includes the internal combustion engine, its ATS and the tanks and pipes/devices needed to the operation of the traction system.

A further automatic relief valve, not shown, can be arranged on the WHR circuit working at a higher threshold pressure with respect to the pressure thresholds used to decide how much and where to disperse the excessive WHR medium, in order to disperse, as really last chance the WHR medium in the ambient in order to avoid the explosion of the WHR system.

It should be understood that, according to the severity of the failure of the WHR, the previous relief valves can open at the same time, in relation with the fastness of the dangerous event. However, the above listing succession, second, third and so on, remains valid in case of gradual increasing of the WHR medium pressure/temperature. According to a preferred embodiment of the invention, three liquid tank devices are selected to vent an excess of organic fluid and they are:
- The urea based reducing agent to be injected immediately upstream of said SCR,
- the coolant circuit arranged to cool thecombustion engine,
- the windscreen washing liquid tank.

Figure 2 differs from figure 1 only for the connection point of the venting pipes. The venting pipes VP2, VP3, VP4 with their relief valves are simply not shown in figure 2, but they can be included either as in figure 1 between the evaporator and the expander or, as suggested by figure 2, between the condenser and the pump, preferably between the fluid tank and the pump.

According to a further aspect of the invention, that can be combined with any of the previous ones, the internal combustion engine, especially if a gasoline/gas engine, during WHR medium release, can be operated in lean burn, in order to release (more) oxygen in the exhaust line, useful to burn the ethanol vented therein.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention, which is defined by the appended claims, are deemed to be covered by this invention.

Further implementation details will not be described, as the man skilled in the art is able to carry out the invention starting from the teaching of the above description.

## Claims

1. Combustion engine (E) provided with:
- an exhaust pipe (EP) connected to a combustion engine exhaust manifold;
- an After treatment system (ATS) operatively coupled with said exhaust manifold; and
- a Waste Heat Recovery System (WHR) circuit connected to said exhaust manifold for draining thermal energy from exhaust gas produced by said combustion engine in order to produce mechanical energy by exploiting an organic fluid as working medium,
wherein the WHR comprises at least a venting pipe (VP2b, VP3, VP4, VP5), operatively connecting said WHR circuit with at least a corresponding liquid tank (WTANK, AdBlue, FUEL, E), with a corresponding relief valve (V2b, V3, V4, V5) operatively arranged thereon to vent an excess of said organic fluid in said liquid tank on the basis of a pressure and/or temperature of said working medium;
**characterized in that** said liquid tank is one of
- a (WTANK) dedicated water tank
- a (AdBlue) tank arranged to contain a urea-based reducing agent and to supply said After treatment system with said urea-based reducing agent,
- a (FUEL) tank arranged to contain fuel and to supply said internal combustion engine (E) with said fuel,
- a (E) coolant circuit of said internal combustion engine,
- a windscreen washing liquid tank.

2. Combustion engine according to claim 1, wherein said organic fluid is a different compound with respect to said urea-based reducing agent.

3. Combustion engine according to claim 1 or 2, wherein said After treatment system (ATS) comprises a diesel oxidation catalyst (DOC) and/or a selective catalytic reduction (SCR) and/or a three-way catalyst and wherein the engine comprises a further venting pipe (VP1) connecting said WHR circuit with the ATS in a point immediately upstream of said DOC and/SCR and/or three-way catalyst and a relative further relief valve (V1) to vent an excess of said organic fluid along with said ATS on the basis of said pressure and/or temperature of said working medium.

4. Combustion engine according to any one of previous claims, further comprising an intake pipe and further comprising a further venting pipe (VP2), operatively connecting said WHR circuit with said intake pipe, and a further relief valve (V2) arranged on said second venting pipe (VP2) arranged to open when or after said relief valve ( V2b, V3, V4, V5) opens, to vent an excess of said working fluid into said intake pipe.

5. Combustion engine according to any one of previous claims 3 - 4, wherein said ATS comprises an SCR device and said liquid tank (AdBlue), named as first tank, containing said urea based reducing agent to be injected immediately upstream of said SCR, and further comprising a third venting pipe (VP3), operatively connecting said WHR with said first tank, and a third relief valve arranged on said third venting pipe (VP3) arranged to open when or after said first relief valve (V1) opens, to vent an excess of said organic fluid in said first tank.

6. Combustion engine according to any of claims 3 to 5, further comprising said liquid tank (FUEL), named as second tank, arranged to contain said liquid fuel suitable to be injected in said internal combustion engine and further comprising a fourth venting pipe (VP4), operatively connecting said WHR with said second tank (FUEL), and a fourth relief valve (VP4) arranged on said fourth venting pipe (VP4) arranged to open when or after said first relief valve (V1) opens, to vent an excess of said organic fluid in said second tank.

7. Combustion engine according to any one of claims 1 to 6, further comprising a coolant circuit arranged to cool the combustion engine and further comprising a fifth venting pipe, operatively connecting said WHR with said coolant circuit, and a fifth relief valve arranged on said fifth venting pipe arranged to open when or after said first relief valve (V1) opens, to vent an excess of said organic fluid in said coolant circuit.

8. Combustion engine according to any one of claims 2 to 7, further comprising said dedicated water tank and further comprising a sixth venting pipe, operatively connecting said WHR with said dedicated water tank, and a sixth relief valve arranged on said sixth venting pipe arranged to open when or after said first relief valve (V1) opens, to vent an excess of said organic fluid in said water tank.

9. Combustion engine according to any one of the previous claims, wherein said WHR further comprises a circulation pump (P), further arranged to stop its functioning after at least one of the previous second, third, fourth, fifth or sixth valve opens.

10. Combustion engine according to any one of previous claims, wherein said WHR defines a circuit where said organic fluid circulates in operation, the WHR comprising a first heat exchanger (EVAP) arranged to extract heat from said exhaust pipe and a second heat exchanger (COND) arranged to delivery heat to the ambient air and an expander arranged between the first and second heat exchanger according to the ethanol direction of circulation and said pump between the second and first heat exchanger to provide said WHR medium to said first heat exchanger, wherein the expander is arranged to produce mechanical energy and wherein said relief valve is arranged:
- between said first heat exchanger and said expander and/or
- between said second heat exchanger and said pump.

11. Combustion engine according to any one of previous claims, further comprising an intermediate tank (ITK) arranged on said first venting pipe (VP1) to spread in the time said venting of WHR medium.

12. Combustion engine according to any one of previous claims 3 - 11, further comprising a control unit device (ECU) programmed to control the internal combustion engine and programmed to control said further relief valve (V1, V1') and programmed to operate said internal combustion engine in such a way to increase an oxygen content in said exhaust gas while said ethanol is vented upstream of or along with said ATS.

13. Vehicle comprising the combustion engine provided with a Waste Heat Recovery System (WHR) draining thermal energy from an exhaust pipe (EP) of the combustion engine (E) in order to produce mechanical energy (ME) and exploiting an organic fluid as working medium, according to any one of the claims from 1 to 12.

14. Method for managing an overpressure and/or overtemperature in a Waste Heat Recovery System (WHR) circuit associated to an exhaust pipe (EP) connected to a combustion engine exhaust manifold, for draining thermal energy from exhaust gas produced by said combustion engine in order to produce mechanical energy by exploiting an organic fluid as working medium, the method comprising the step of monitoring pressure and/or temperature of said organic fluid and the step of venting an excess of said organic fluid in a first device, as first reaction step, and contemporary or in succession in a second device, as second reaction step, distinct form said first device, according to a severity of said overpressure and/or overtemperature.

15. Method according to claim 14, wherein said first device and said at least second device are chosen within
- dedicated water tank (TANK),
- engine coolant circuit (E),
- a fuel tank (FUEL),
- urea based reducing agent (AdBlue),
- windscreen washing liquid tank,
- after treatment system (ATS)
- engine intake manifold (IN).

16. Method according to claim 15, wherein at least three liquid tanks are selected to vent three corresponding excesses of said organic fluid and said at least three liquid tanks are
- said engine coolant circuit (E),
- said urea based reducing agent (AdBlue),
- said windscreen washing liquid tank.

17. Vehicle control unit comprising elaborating means and storage means configured to execute all the steps of any one of claim 15 or 16, when installed in the vehicle of claim 13.

## Patentansprüche

1. Brennkraftmaschine (E), die mit Folgendem versehen ist:
- einer Auslassleitung (EP), die mit einem Brennkraftmaschinenabgasverteiler verbunden ist;
- einem Nachbehandlungssystem (ATS), das an den Auslassverteiler funktionstechnisch gekoppelt ist; und
- einem Abwärmerückgewinnungssystemkreis (WHR-Kreis), der mit dem Auslassverteiler verbunden ist, um Wärmeenergie aus einem Abgas, das durch die Brennkraftmaschine erzeugt wird, abzuführen, um unter Ausnutzung eines organischen Fluids als Arbeitsmedium mechanische Energie zu erzeugen, wobei
das WHR mindestens eine Entlüftungsleitung (VP2b, VP3, VP4, VP5) umfasst, die den WHR-Kreis mit mindestens einem entsprechenden Flüssigkeitsbehälter (WTANK, AdBlue, FUEL, E) funktionstechnisch verbindet, wobei ein entsprechendes Begrenzungsventil (V2b, V3, V4, V5) funktionstechnisch darin angeordnet ist, um einen Überschuss des organischen Fluids auf der Grundlage eines Drucks und/oder einer Temperatur des Arbeitsmediums in den Flüssigkeitsbehälter zu entlüften;
**dadurch gekennzeichnet, dass** der Flüssigkeitsbehälter einer der Folgenden ist:
- ein (WTANK) fest zugeordneter Wasserbehälter,
- ein (AdBlue) Behälter, der ausgelegt ist, ein harnstoffbasiertes Reduktionsmittel zu enthalten und dem Nachbehandlungssystem das harnstoffbasierte Reduktionsmittel zuzuführen,
- ein (FUEL) Behälter, der ausgelegt ist, Kraftstoff zu enthalten und der Brennkraftmaschine (E) den Kraftstoff zuzuführen,
- ein (E) Kühlmittelkreis der Brennkraftmaschine oder
- ein Windschutzscheiben-Waschflüssigkeitsbehälter.

2. Brennkraftmaschine nach Anspruch 1, wobei das organische Fluid eine andere Verbindung als das harnstoffbasierte Reduktionsmittel ist.

3. Brennkraftmaschine nach Anspruch 1 oder 2, wobei das Nachbehandlungssystem (ATS) einen Dieseloxidationskatalysator (DOC) und/oder eine selektive katalytische Reduktion (SCR) und/oder einen Dreiwegekatalysator umfasst und die Kraftmaschine eine weitere Entlüftungsleitung (VP1), die die WHR-Schaltung mit dem ATS an einem Punkt unmittelbar stromaufwärts des DOC und/oder der SCR und/oder des Dreiwegekatalysators verbindet, und ein jeweiliges weiteres Begrenzungsventil (V1), um einen Überschuss des organischen Fluids zusammen mit dem ATS auf der Grundlage des Drucks und/oder der Temperatur des Arbeitsmediums zu entlüften, umfasst.

4. Brennkraftmaschine nach einem der vorhergehenden Ansprüche, die ferner eine Einlassleitung umfasst und ferner eine weitere Entlüftungsleitung (VP2), die die WHR-Schaltung mit der Einlassleitung funktionstechnisch verbindet, und ein weiteres Begrenzungsventil (V2), das in der zweiten Entlüftungsleitung (VP2) angeordnet ist und ausgelegt ist, zu öffnen, wenn oder nachdem das Begrenzungsventil (V2b, V3, V4, V5) geöffnet hat, um einen Überschuss des Arbeitsfluids in die Einlassleitung zu entlüften, umfasst.

5. Brennkraftmaschine nach einem der vorhergehenden Ansprüche 3-4, wobei das ATS eine SCR-Vorrichtung und den Flüssigkeitsbehälter (AdBlue), der als erster Behälter bezeichnet wird und das harnstoffbasierte Reduktionsmittel, das unmittelbar stromaufwärts der SCR eingespeist werden soll, enthält, umfasst und ferner eine dritte Entlüftungsleitung (VP3), die das WHR mit dem ersten Behälter funktionstechnisch verbindet, und ein drittes Begrenzungsventil, das in der dritten Entlüftungsleitung (VP3) angeordnet ist und ausgelegt ist, zu öffnen, wenn oder nachdem das erste Begrenzungsventil (V1) geöffnet hat, um einen Überschuss des organischen Fluids in den ersten Behälter zu entlüften, umfasst.

6. Brennkraftmaschine nach einem der Ansprüche 3 bis 5, die ferner den Flüssigkeitsbehälter (FUEL), der als zweiter Behälter bezeichnet wird und ausgelegt ist, den Flüssigkraftstoff, der geeignet ist, in die Brennkraftmaschine eingespeist zu werden, zu enthalten, umfasst und ferner eine vierte Entlüftungsleitung (VP4), die das WHR mit dem zweiten Behälter (FUEL) funktionstechnisch verbindet, und ein viertes Begrenzungsventil (VP4), das in der vierten Entlüftungsleitung (VP4) angeordnet ist und ausgelegt ist, zu öffnen, wenn oder nachdem das erste Begrenzungsventil (V1) geöffnet hat, um einen Überschuss des organischen Fluids in den zweiten Behälter zu entlüften, umfasst.

7. Brennkraftmaschine nach einem der Ansprüche 1 bis 6, die ferner einen Kühlmittelkreis, der ausgelegt ist, die Brennkraftmaschine zu kühlen, umfasst und ferner eine fünfte Entlüftungsleitung, die das WHR mit dem Kühlmittelkreis funktionstechnisch verbindet, und ein fünftes Begrenzungsventil, das in der fünften Entlüftungsleitung angeordnet ist und ausgelegt ist, zu öffnen, wenn oder nachdem das erste Begrenzungsventil (V1) geöffnet hat, um einen Überschuss des organischen Fluids in den Kühlmittelkreis zu entlüften, umfasst.

8. Brennkraftmaschine nach einem der Ansprüche 2 bis 7, die ferner den fest zugeordneten Wasserbehälter umfasst und ferner eine sechste Entlüftungsleitung, die das WHR mit dem fest zugeordneten Wasserbehälter funktionstechnisch verbindet, und ein sechstes Begrenzungsventil, das in der sechsten Entlüftungsleitung angeordnet ist und ausgelegt ist, zu öffnen, wenn oder nachdem das erste Begrenzungsventil (V1) geöffnet hat, um einen Überschuss des organischen Fluids in den Wasserbehälter zu entlüften, umfasst.

9. Brennkraftmaschine nach einem der vorhergehenden Ansprüche, wobei das WHR ferner eine Zirkulationspumpe (P) umfasst, die ferner ausgelegt ist, ihre Funktion zu stoppen, nachdem das vorhergehende zweite und/oder das vorhergehende dritte und/oder das vorhergehende vierte und/oder das vorhergehende fünfte und/oder das vorhergehende sechste Ventil geöffnet haben.

10. Brennkraftmaschine nach einem der vorhergehenden Ansprüche, wobei das WHR einen Kreis definiert, in dem das organische Fluid im Betrieb zirkuliert, das WHR einen ersten Wärmetauscher (EVAP), der ausgelegt ist, Wärme aus der Auslassleitung zu extrahieren, einen zweiten Wärmetauscher (COND), der ausgelegt ist, Wärme an die Umgebungsluft abzugeben, einen Expander, der zwischen dem ersten und dem zweiten Wärmetauscher gemäß der Ethanolzirkulationsrichtung angeordnet ist, und die Pumpe zwischen dem zweiten und dem ersten Wärmetauscher, um dem ersten Wärmetauscher das WHR-Medium zu liefern, umfasst, wobei der Expander ausgelegt ist, mechanische Energie zu erzeugen, und das Begrenzungsventil angeordnet ist
- zwischen dem ersten Wärmetauscher und dem Expander und/oder
- zwischen dem zweiten Wärmetauscher und der Pumpe.

11. Brennkraftmaschine nach einem der vorhergehenden Ansprüche, die ferner einen Zwischenbehälter (ITK) umfasst, der in der ersten Entlüftungsleitung (VP1) angeordnet ist, um das Entlüften des WHR-Mediums zeitlich zu verteilen.

12. Brennkraftmaschine nach einem der vorhergehenden Ansprüche 3-11, die ferner eine Steuereinheit (ECU) umfasst, die programmiert ist, die Brennkraftmaschine zu steuern, programmiert ist, das weitere Begrenzungsventil (V1, V1') zu steuern, und programmiert ist, die Brennkraftmaschine derart zu betreiben, dass ein Sauerstoffgehalt im Abgas erhöht wird, während das Ethanol stromaufwärts des ATS oder zusammen mit ihm entlüftet wird.

13. Fahrzeug, das die Brennkraftmaschine, die mit einem Abwärmerückgewinngungssystem (WHR), das Wärmeenergie von einer Auslassleitung (EP) der Brennkraftmaschine (E) abführt, um mechanische Energie (ME) zu erzeugen, und ein organisches Fluid als Arbeitsmedium nutzt, versehen ist, nach einem der Ansprüche 1 bis 12 umfasst.

14. Verfahren zum Managen eines Überdrucks und/oder einer Übertemperatur in einem Abwärmerückgewinnungssystemkreis (WHR-Kreis), der einer Auslassleitung (EP), die mit einem Brennkraftmaschinenabgasverteiler verbunden ist, zugeordnet ist, um Wärmeenergie aus einem Abgas, das durch die Brennkraftmaschine erzeugt wird, abzuführen, um unter Ausnutzung eines organischen Fluids als Arbeitsmedium mechanische Energie zu erzeugen, wobei das Verfahren den Schritt des Überwachens des Drucks und/oder der Temperatur des organischen Fluids und den Schritt des Entlüftens eines Überschusses des organischen Fluids als ersten Reaktionsschritt in einer ersten Vorrichtung und gleichzeitig oder nacheinander als zweiten Reaktionsschritt in einer zweiten Vorrichtung, die von der ersten Vorrichtung verschieden ist, gemäß einer Stärke des Überdrucks und/oder der Übertemperatur umfasst.

15. Verfahren nach Anspruch 14, wobei die erste Vorrichtung und die mindestens zweite Vorrichtung aus Folgendem gewählt sind:
- einem fest zugeordneten Wasserbehälter (TANK),
- einem Kraftmaschinenkühlmittelkreis (E),
- einem Kraftstofftank (FUEL),
- einem harnstoffbasierten Reduktionsmittel (AdBlue),
- einem Windschutzscheiben-Waschflüssigkeitsbehälter,
- einem Nachbehandlungssystem (ATS) und
- einem Kraftmaschineneinlassverteiler (IN).

16. Verfahren nach Anspruch 15, wobei mindestens drei Flüssigkeitsbehälter gewählt werden, um drei entsprechende Überschüsse des organischen Fluids zu entlüften, und die mindestens drei Flüssigkeitsbehälter Folgende sind:
- der Kraftmaschinenkühlmittelkreis (E),
- das harnstoffbasierte Reduktionsmittel (AdBlue) und
- der Windschutzscheiben-Waschflüssigkeitsbehälter.

17. Fahrzeugsteuereinheit, die Ausführungsmittel und Speichermittel umfasst und konfiguriert ist, alle Schritte eines der Ansprüche 15 oder 16 auszuführen, wenn sie im Fahrzeug nach Anspruch 13 installiert ist.

## Revendications

1. Moteur à combustion (E) pourvu :
- d'un tuyau d'échappement (EP) raccordé à une tubulure d'échappement de moteur à combustion ;
- d'un système de post-traitement (ATS) fonctionnellement accouplé à ladite tubulure d'échappement ; et
- d'un circuit de système de récupération de chaleur perdue (WHR) raccordé à ladite tubulure d'échappement pour drainer l'énergie thermique du gaz d'échappement produit par ledit moteur à combustion afin de produire de l'énergie mécanique en exploitant un fluide organique comme milieu de travail,
dans lequel le WHR comprend au moins un tuyau de mise à l'air libre (VP2b, VP3, VP4, VP5), raccordant fonctionnellement ledit circuit de WHR à au moins un réservoir de liquide (WTANK, AdBlue, FUEL, E) correspondant, avec une soupape de décharge (V2b, V3, V4, V5) correspondante fonctionnellement agencée sur celui-ci pour mettre à l'air libre un excès dudit fluide organique dans ledit réservoir de liquide sur la base d'une pression et/ou d'une température dudit milieu de travail ;
**caractérisé en ce que** ledit réservoir de liquide est l'un parmi
- un réservoir d'eau dédié (WTANK)
- un réservoir (AdBlue) conçu pour contenir un agent de réduction à base d'urée et pour apporter audit système de post-traitement ledit agent de réduction à base d'urée,
- un réservoir (FUEL) conçu pour contenir du combustible et pour apporter audit moteur à combustion interne (E) ledit combustible,
- un circuit de fluide caloporteur (E) dudit moteur à combustion interne,
- un réservoir de liquide de lavage de pare-brise.

2. Moteur à combustion selon la revendication 1, dans lequel ledit fluide organique est un composé différent par rapport audit agent de réduction à base d'urée.

3. Moteur à combustion selon la revendication 1 ou 2, dans lequel ledit système de post-traitement (ATS) comprend un catalyseur d'oxydation diesel (DOC) et/ou une réduction catalytique sélective (SCR) et/ou un catalyseur à trois voies et dans lequel le moteur comprend un autre tuyau de mise à l'air libre (VP1) raccordant ledit circuit de WHR à l'ATS dans un point immédiatement en amont dudit DOC et/ou SCR et/ou catalyseur à trois voies et une autre soupape de décharge relative (V1) pour mettre à l'air libre un excès dudit fluide organique avec ledit ATS sur la base de ladite pression et/ou température dudit milieu de travail.

4. Moteur à combustion selon l'une quelconque des revendications précédentes, comprenant en outre un tuyau d'admission et comprenant en outre un autre tuyau de mise à l'air libre (VP2), raccordant fonctionnellement ledit circuit de WHR audit tuyau d'admission, et une autre soupape de décharge (V2) agencée sur ledit deuxième tuyau de mise à l'air libre (VP2) conçue pour s'ouvrir lorsque ladite soupape de décharge (V2b, V3, V4, V5) s'ouvre ou après l'ouverture de cette dernière, pour mettre à l'air libre un excès dudit fluide de travail dans ledit tuyau d'admission.

5. Moteur à combustion selon l'une quelconque des revendications précédentes 3-4, dans lequel ledit ATS comprend un dispositif de SCR et ledit réservoir de liquide (AdBlue), appelé premier réservoir, contenant ledit agent de réduction à base d'urée à injecter immédiatement en amont de ladite SCR, et comprenant en outre un troisième tuyau de mise à l'air libre (VP3), raccordant fonctionnellement ledit WHR audit premier réservoir, et une troisième soupape de décharge agencée sur ledit troisième tuyau de mise à l'air libre (VP3) conçue pour s'ouvrir lorsque ladite première soupape de décharge (V1) s'ouvre ou après l'ouverture de cette dernière, pour mettre à l'air libre un excès dudit fluide organique dans ledit premier réservoir.

6. Moteur à combustion selon l'une quelconque des revendications 3 à 5, comprenant en outre ledit réservoir de liquide (FUEL), appelé deuxième réservoir, conçu pour contenir ledit combustible liquide approprié pour être injecté dans ledit moteur à combustion interne et comprenant en outre un quatrième tuyau de mise à l'air libre (VP4), raccordant fonctionnellement ledit WHR audit deuxième réservoir (FUEL), et une quatrième soupape de décharge (VP4) agencée sur ledit quatrième tuyau de mise à l'air libre (VP4) conçue pour s'ouvrir lorsque ladite première soupape de décharge (V1) s'ouvre ou après l'ouverture de cette dernière, pour mettre à l'air libre un excès dudit fluide organique dans ledit deuxième réservoir.

7. Moteur à combustion selon l'une quelconque des revendications 1 à 6, comprenant en outre un circuit de fluide caloporteur conçu pour refroidir le moteur à combustion et comprenant en outre un cinquième tuyau de mise à l'air libre, raccordant fonctionnellement ledit WHR audit circuit de fluide caloporteur, et une cinquième soupape de décharge agencée sur ledit cinquième tuyau de mise à l'air libre conçue pour s'ouvrir lorsque ladite première soupape de décharge (V1) s'ouvre ou après l'ouverture de cette dernière, pour mettre à l'air libre un excès dudit fluide organique dans ledit circuit de fluide caloporteur.

8. Moteur à combustion selon l'une quelconque des revendications 2 à 7, comprenant en outre ledit réservoir d'eau dédié et comprenant en outre un sixième tuyau de mise à l'air libre, raccordant fonctionnellement ledit WHR audit réservoir d'eau dédié, et une sixième soupape de décharge agencée sur ledit sixième tuyau de mise à l'air libre conçue pour s'ouvrir lorsque ladite première soupape de décharge (V1) s'ouvre ou après l'ouverture de cette dernière, pour mettre à l'air libre un excès dudit fluide organique dans ledit réservoir d'eau.

9. Moteur à combustion selon l'une quelconque des revendications précédentes, dans lequel ledit WHR comprend en outre une pompe de circulation (P), en outre conçue pour arrêter son fonctionnement après l'ouverture d'au moins une parmi les deuxième, troisième, quatrième, cinquième ou sixième soupapes précédentes.

10. Moteur à combustion selon l'une quelconque des revendications précédentes, dans lequel ledit WHR définit un circuit où ledit fluide organique circule en fonctionnement, le WHR comprenant un premier échangeur de chaleur (EVAP) conçu pour extraire de la chaleur dudit tuyau d'échappement et un deuxième échangeur de chaleur (COND) conçu pour distribuer de la chaleur à l'air ambiant et un détendeur agencé entre les premier et deuxième échangeurs de chaleur en fonction de la direction de circulation d'éthanol et ladite pompe entre les deuxième et premier échangeurs de chaleur pour fournir ledit milieu de WHR audit premier échangeur de chaleur, dans lequel le détendeur est conçu pour produire de l'énergie mécanique et dans lequel ladite soupape de décharge est agencée :
- entre ledit premier échangeur de chaleur et ledit détendeur et/ou
- entre ledit deuxième échangeur de chaleur et ladite pompe.

11. Moteur à combustion selon l'une quelconque des revendications précédentes, comprenant en outre un réservoir intermédiaire (ITK) agencé sur ledit premier tuyau de mise à l'air libre (VP1) pour étaler dans le temps ladite mise à l'air libre de milieu de WHR.

12. Moteur à combustion selon l'une quelconque des revendications précédentes 3-11, comprenant en outre un dispositif d'unité de commande (ECU) programmé pour commander le moteur à combustion interne et programmé pour commander ladite autre soupape de décharge (V1, V1')et programmé pour faire fonctionner ledit moteur à combustion interne de manière à augmenter une teneur en oxygène dans ledit gaz d'échappement tandis que ledit éthanol est mis à l'air libre en amont dudit ATS ou avec ce dernier.

13. Véhicule comprenant le moteur à combustion pourvu d'un système de récupération de chaleur perdue (WHR) drainant l'énergie thermique d'un tuyau d'échappement (EP) du moteur à combustion (E) afin de produire de l'énergie mécanique (ME) et exploitant un fluide organique en tant que milieu de travail, selon l'une quelconque des revendications 1 à 12.

14. Procédé de gestion d'une surpression et/ou d'une sur-température dans un circuit de système de récupération de chaleur perdue (WHR) associé à un tuyau d'échappement (EP) raccordé à une tubulure d'échappement de moteur à combustion, pour drainer l'énergie thermique du gaz d'échappement produit par ledit moteur à combustion afin de produire de l'énergie mécanique en exploitant un fluide organique en tant que milieu de travail, le procédé comprenant l'étape de surveillance de la pression et/ou de la température dudit fluide organique et l'étape de mise à l'air libre d'un excès dudit fluide organique dans un premier dispositif, comme première étape de réaction, et en même temps ou par la suite dans un deuxième dispositif, comme deuxième étape de réaction, distinct dudit premier dispositif, selon une gravité de ladite surpression et/ou sur-température.

15. Procédé selon la revendication 14, dans lequel ledit premier dispositif et ledit au moins deuxième dispositif sont choisis parmi
- réservoir d'eau dédié (TANK),
- circuit de fluide caloporteur pour moteur (E),
- un réservoir de combustible (FUEL),
- agent de réduction à base d'urée (AdBlue),
- réservoir de liquide de lavage de pare-brise,
- système de post-traitement (ATS),
- tubulure d'admission de moteur (IN).

16. Procédé selon la revendication 15, dans lequel au moins trois réservoirs de liquide sont sélectionnés pour mettre à l'air libre trois excès correspondants dudit fluide organique et lesdits au moins trois réservoirs de liquide sont
- ledit circuit de fluide caloporteur pour moteur (E),
- ledit agent de réduction à base d'urée (AdBlue),
- ledit réservoir de liquide de lavage de pare-brise.

17. Unité de commande de véhicule comprenant un moyen d'élaboration et un moyen de stockage conçus pour exécuter toutes les étapes selon l'une quelconque des revendications 15 ou 16, lorsqu'elle est installée dans le véhicule selon la revendication 13.
